# EUROPÄISCHE PATENTSCHRIFT

(11) **EP 1 370 081 B1**
(45) Veröffentlichungstag und Bekanntmachung des Hinweises auf die Patenterteilung: **05.09.2018**
(21) Anmeldenummer: 03012658.5
(22) Anmeldetag: 04.06.2003
(51) Int. Cl.: H04N 7/088

(54) **Verfahren und Vorrichtung zur Überwachung eines in einem Fernsehtextdatenstrom übertragenen Parameterwertes**
Method and device for monitoring the value of a parameter transmitted in a teletext data stream
Méthode et dispositif de surveillance de la valeur d'un paramètre transmis dans un flux de données télétexte

(30) Priorität: 06.06.2002 DE 10225030
(43) Veröffentlichungstag der Anmeldung: 10.12.2003
(73) Patentinhaber: Grundig Multimedia AG, 6362 Stansstad (CH)
(72) Erfinder: Payer, Wolfgang, 91448 Emskirchen (DE); Finsterer, Harald, 90461 Nürnberg (DE)
(74) Vertreter: Louis Pöhlau Lohrentz

(56) Entgegenhaltungen:
- EP-A- 1 164 793
- DE-A1- 19 755 742

## Beschreibung

Die Erfindung betrifft ein Verfahren und eine Vorrichtung zur Überwachung eines in einem Fernsehtextdatenstrom übertragenen Parameterwertes.

Es ist bekannt, in bestimmten Zeilen der Austastlücken eines Fernsehsignals in Form eines Datenstromes Fernsehtextsignale zu übertragen. Diese Übertragung erfolgt in Form von nummerierten Fernsehtextseiten, wobei jede Fernsehtextseite einem bestimmten Thema zugeordnet ist. Beispielsweise gibt es Nachrichtenseiten, Wirtschaftsseiten, Wetterberichtsseiten, Sportseiten, Seiten, auf denen Abflugs- und Ankunftszeiten von Flugzeugen eines bestimmten Flughafens angegeben sind, usw. Jede dieser nummerierten Fernsehtextseiten ist vom Benutzer mittels einer Bedieneinheit anwählbar. Als Folge einer derartigen Anwahl wird die jeweils spezifizierte Fernsehtextseite aus dem Fernsehtextdatenstrom extrahiert und die in ihr enthaltenen Daten werden auf einem Display, beispielsweise dem Bildschirm eines Fernsehgerätes, angezeigt. Ist die spezifizierte Fernsehtextseite eine Börsenseite, dann können die angezeigten Daten Parameterwerte enthalten, die Börsenkursen entsprechen. Ist die spezifizierte Seite eine Wetterseite, dann können die angezeigten Daten Parameterwerte enthalten, die Temperaturangaben oder Wasserstandsangaben entsprechen. Enthält die spezifizierte Fernsehtextseite Flughafeninformationen, dann können die angezeigten Daten Parameterwerte enthalten, die Abflugs- und/oder Ankunftszeiten entsprechen.

Aus der gattungsbildenden EP 1 164 793 A2 sind ein Verfahren und eine Vorrichtung für den Zugriff auf in Videosignalen enthaltene Börsendaten bekannt, wobei der Zugriff laufend, automatisch und gezielt auf in Videosignalen enthaltene individuelle Börsendaten-Informationen erfolgt und mittels einer vorgebbaren Parametrisierung gewünschte Informationen ausgewählt, gespeichert und auf einen Bildschirm angezeigt werden.

Aus der DE 197 55 742 A1 ist ein Verfahren zur Signalisierung von elektronischen Nachrichten wie beispielsweise Börsennachrichten bekannt, wobei die Signalisierung ausgehend von einem Fernsehgerät visuell auf dem Bildschirm des Fernsehgerätes angezeigt wird und/oder zusätzlich über eine akustische Ausgabe und/oder z.B. an einen Online-Dienst mittels E-Mail oder SMS oder über Telefon erfolgt.

Der Erfindung liegt die Aufgabe zugrunde, einen Weg aufzuzeigen, wie die Nutzungsmöglichkeiten von Fernsehtextübertragungen erweitert werden können.

Diese Aufgabe wird durch ein Verfahren mit den im Anspruch 1 und eine Vorrichtung mit den im Anspruch 5 angegebenen Merkmalen gelöst. Vorteilhafte Ausgestaltungen und Weiterbildungen der Erfindung ergeben sich aus den abhängigen Ansprüchen.
Die Vorteile der Erfindung bestehen insbesondere darin, dass im Fernsehtextdatenstrom übertragene Parameterwerte automatisch überwacht werden. Der Benutzer hat die Möglichkeit, einen bestimmten Parameter auszuwählen, beispielsweise den Börsenkurs einer Firma A und einen Grenzwert für diesen Parameter vorzugeben. Der Empfänger vergleicht den aus dem momentan empfangenen Fernsehtextdatenstrom ermittelten aktuellen Börsenkurs mit dem vom Benutzer vorgegebenen Grenzwert, welcher beispielsweise einem vom Benutzer gewünschten Verkaufskurs entspricht. Erreicht bzw. überschreitet der aktuelle Börsenkurs den Grenzwert, dann wird dies dem Benutzer durch die Ausgabe eines Meldesignals signalisiert.
Die genannte Überwachung erfolgt im eingeschalteten Zustand eines Fernsehempfängers, wenn der Benutzer gerade den Kanal aktiviert hat, in welchem die gewünschte Fernsehtextseite übertragen wird, und auch dann, wenn sich der Fernsehempfänger in einem Bereitschaftsbetrieb befindet, in welchem die zur Durchführung der Überwachungsfunktion notwendigen Bauteile aktiviert bzw. stromversorgt sind. Ist der Fernsehempfänger eingeschaltet und hat der Benutzer gerade einen anderen Kanal aktiviert, dann kann bei Vorliegen eines Fernsehempfängers mit zwei Tunern der Überwachungsbetrieb unter Verwendung des zweiten Tuners im Hintergrund durchgeführt werden. Ist der Fernsehempfänger komplett ausgeschaltet, dann ist der Überwachungsbetrieb unterbrochen. Da jedoch die zur Überwachung notwendigen Daten nichtflüchtig abgespeichert sind, kann der Überwachungsbetrieb nach einem Wiedereinschalten des Fernsehempfängers fortgesetzt werden.
Eine vorteilhafte Weiterbildung der Erfindung besteht darin, zeitlich aufeinanderfolgende, aus dem Fernsehtextdatenstrom gewonnene Ist-Parameterwerte nichtflüchtig abzuspeichern und auf Wunsch des Benutzers in Form eines Diagrammes auf dem Display des Fernsehempfängers anzuzeigen oder mittels eines an den Fernsehempfänger angeschlossenen Druckers auszudrucken.

Um auch dann dem Benutzer das Meldesignal so schnell wie möglich zukommen zu lassen, wenn sich der Benutzer außer Haus befindet, kann das Meldesignal gemäß vorteilhafter Weiterbildungen der Erfindung auch in Form einer automatisch erstellten e-mail-Nachricht, einer automatisch erstellten SMS-Nachricht oder eines automatisch generierten Telefonanrufes ausgesandt werden. Der Empfang und die Wiedergabe dieses Meldesignals erfolgt dann beispielsweise im Büro des Benutzers mittels eines dort vorhandenen Personal-Computers bzw. eines Handys des Benutzers.

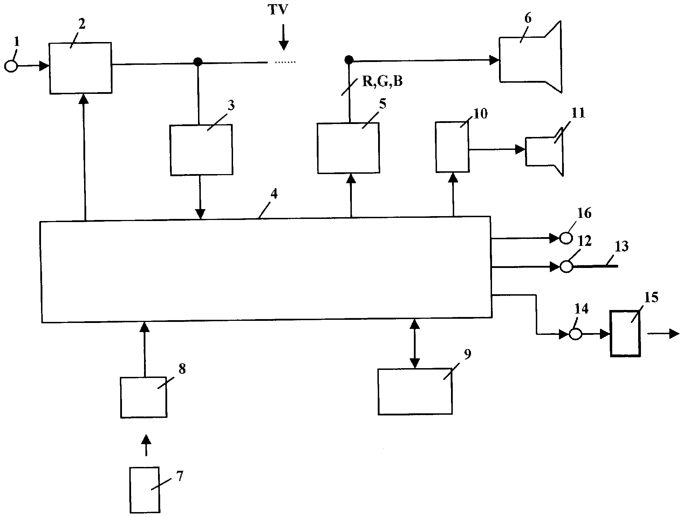

Weitere vorteilhafte Eigenschaften der Erfindung ergeben sich aus der nachfolgenden Erläuterung eines Ausführungsbeispiels anhand der Figur.

Diese zeigt ein Blockschaltbild eines Fernsehempfängers TV, welcher einen Eingangsanschluss 1, einen ersten Ausgang 12, einen zweiten Ausgang 14 und einen dritten Ausgang 16 aufweist. Weiterhin ist der dargestellte Fernsehempfänger mit einer Empfangsstufe 2, einer Fernsehtextabtrennstufe 3, einem Mikrocomputer 4, einem Zeichengenerator 5, einem Display 6, einer Bedieneinheit 7, 8, einem nichtflüchtigen Speicher 9, einem Tonsignalgenerator 10 und einem Lautsprecher 11 versehen. Die Bedieneinheit weist einen Fernbedienungsgeber 7 und einen Fernbedienempfänger 8 auf.

Der erste Ausgang 12 ist mit einer ISDN-Leitung 13 und der zweite Ausgang 14 mit einem Handy 15 verbunden. Beim Ausgang 16 handelt es sich um eine Druckerschnittstelle, an welche ein nichtgezeichneter Drucker angeschlossen ist.

Die Funktionsweise des dargestellten Fernsehempfängers ist wie folgt:
Nach dem Einschalten des Fernsehgerätes in den Normalbetrieb wählt der Benutzer mittels der Bedieneinheit 7, 8 ein gewünschtes Fernsehprogramm aus, in dessen Fernsehtext Börsenkurse übertragen werden. Der Mikrocomputer 4 steuert die Empfangsstufe 2 derart an, dass diese aus den am Eingang 1 vorliegenden Eingangssignalen die dem gewünschten Fernsehprogramm entsprechenden Signale separiert.

Anschließend aktiviert der Benutzer mittels der Bedieneinheit den Fernsehtextbetrieb und spezifiziert durch Eingabe einer dreistelligen Seitennummer mittels der Bedieneinheit die gewünschte Fernsehtextseite, so dass die der gewünschten Fernsehtextseite entsprechenden Daten vom Mikrocomputer 4 aus dem Fernsehtextdatenstrom separiert und unter Verwendung des Zeichengenerators 5 auf dem Display 6 dargestellt werden.

Möchte der Benutzer einen der auf dem Display 6 dargestellten Parameterwerte überwachen lassen, beispielsweise den Börsenkurs der Firma A, dann markiert er den zu überwachenden Parameterwert unter Verwendung eines Cursors, indem er diesen auf den zu überwachenden Parameterwert verschiebt und dann eine Bestätigungstaste betätigt. Durch Betätigen dieser Bestätigungstaste wird automatisch die Anzeige einer Menüseite auf dem Bildschirm 6 ausgelöst, auf welcher der Benutzer zur Eingabe weiterer Überwachungsparameter aufgefordert wird. Zu diesen weiteren Überwachungsparametern gehören ein Parametergrenzwert, gegebenenfalls ein Überwachungszeitintervall und gegebenenfalls auch die Art und Weise der Ausgabe eines Meldesignals. Diese Überwachungsparameter, zu denen auch eine Information über den eingestellten Fernsehkanal, die Seitennummer der angewählten Fernsehtextseite und eine Information über die Position des zu überwachenden Parameters in der angewählten Fernsehtextseite gehören, werden im nichtflüchtigen Speicher 9 abgespeichert.

Ist die vorstehend beschriebene Überwachungsprogrammierung erfolgt, dann überwacht der Mikrocomputer 4 im eingeschalteten Zustand des Fernsehempfängers, wenn der zu überwachende Fernsehkanal eingestellt ist, und in einem Bereitschaftsbetrieb, in welchem alle zur Überwachung notwendigen Bauteile weiterhin mit Strom versorgt werden, den zu überwachenden Parameter. Dies geschieht durch einen Vergleich des momentanen, aus dem Fernsehtextdatenstrom abgeleiteten Parameterwertes mit dem abgespeicherten Parametergrenzwert. Ergibt dieser Vergleich eine Übereinstimmung der miteinander verglichenen Werte oder ein Überschreiten des Parametergrenzwertes, dann generiert der Mikrocomputer 4 ein Meldesignal. Für die Generierung dieses Meldesignals gibt es mehrere Möglichkeiten, die nachfolgend erläutert werden:
Eine erste Möglichkeit besteht darin, das Meldesignal in Form einer Bildschirmeinblendung zu generieren. In diesem Fall steuert der Mikrocomputer 4 den Zeichengenerator 5 an, an dessen Ausgang das Meldesignal als R, G, B-Signal bereitgestellt wird. Von dort aus wird es zum Display 6 übertragen und auf diesem dargestellt.

Eine zweite Möglichkeit besteht darin, das Meldesignal in akustischer Form auszugeben. In diesem Fall steuert der Mikrocomputer 4 den Tonsignalgenerator 10 an, über dessen Ausgang das Meldesignal an den Lautsprecher 11 weitergeleitet wird.

Bei beiden vorstehend genannten Möglichkeiten kann der Benutzer das Meldesignal nur dann wahrnehmen, wenn er sich in der Nähe des Fernsehgerätes aufhält.

Eine dritte Möglichkeit der Generierung eines Meldesignals besteht darin, dieses in Form einer e-mail-Nachricht zu erstellen und über den Ausgang 12, die ISDN-Leitung 13 und das öffentliche Telefonnetz an einen externen Computer zu übertragen. Dieser externe Computer steht beispielsweise am Arbeitsplatz des Benutzers. Die zugehörige e-mail-Adresse ist in einem Speicher des Fernsehempfängers TV hinterlegt. Sind die Kriterien für die Auslösung des Meldesignals erfüllt, dann generiert der Mikrocomputer 4 das Meldesignal in Form einer e-mail-Nachricht, die dann automatisch an die email-Adresse des externen Computers versandt wird. Auf diese Weise kann der Benutzer auch an seinem Arbeitsplatz darüber informiert werden, dass der zu überwachende Parameterwert den vorgegebenen Parametergrenzwert erreicht oder überschritten hat. Dies ermöglicht es dem Benutzer, schnell auf dieses Ereignis zu reagieren und geeignete Maßnahmen in die Wege zu leiten.

Eine vierte Möglichkeit der Generierung eines Meldesignals besteht darin, dieses in Form einer SMS-Nachricht zu erstellen und entweder über den Ausgang 12, die ISDN-Leitung 13 und das öffentliche Telefonnetz an einen externen Computer zu übertragen oder über den Ausgang 14 und ein an diesen angeschlossenes Handy 15 an ein externes Handy zu übertragen. Der externe Computer steht beispielsweise am Arbeitsplatz des Benutzers. Das externe Handy trägt der Benutzer bei sich.

Die jeweils zugehörige "SMS-Adresse" bzw. Telefonnummer ist in einem Speicher des Fernsehempfängers TV hinterlegt. Sind die Kriterien für die Auslösung des Meldesignals erfüllt, dann generiert der Mikrocomputer 4 das Meldesignal in Form einer SMS-Nachricht, die dann automatisch an den externen Computer oder über das Handy 15 an das externe Handy versandt wird. Auf diese Weise kann der Benutzer auch an seinem Arbeitsplatz bzw. an einem beliebigen anderen Ort darüber informiert werden, dass der zu überwachende Parameterwert den vorgegebenen Parametergrenzwert erreicht oder überschritten hat. Dies ermöglicht es dem Benutzer, schnell auf dieses Ereignis zu reagieren und geeignete Maßnahmen in die Wege zu leiten.

Eine fünfte Möglichkeit der Generierung eines Meldesignals besteht darin, dieses in Form einer Telefonnachricht zu erstellen und über den Ausgang 12, die ISDN-Leitung 13 und das öffentliche Telefonnetz an ein externes Telefon zu übertragen. Dieses externe Telefon steht beispielsweise im Büro des Benutzers. Die zugehörige Telefonnummer ist in einem Speicher des Fernsehempfängers TV hinterlegt. Sind die Kriterien für die Auslösung des Meldesignals erfüllt, dann generiert der Mikrocomputer 4 das Meldesignal unter Verwendung eines nicht gezeichneten Sprach-Synthesizers in Form einer Telefonnachricht, die dann automatisch an das externe Telefon übermittelt wird. Auf diese Weise kann der Benutzer auch in seinem Büro darüber informiert werden, dass der zu überwachende Parameterwert den vorgegebenen Parametergrenzwert erreicht oder überschritten hat. Dies ermöglicht es dem Benutzer, schnell auf dieses Ereignis zu reagieren und geeignete Maßnahmen in die Wege zu leiten.

Beim vorstehend beschriebenen Ausführungsbeispiel wurde als Parameter ein Börsenkurs festgelegt und der Börsenkurs auf das Erreichen oder Überschreiten eines vorgegebenen Grenzwertes überwacht. Alternativ dazu ist es auch möglich, andere Parameter auf das Erreichen oder Überschreiten eines vorgegebenen Grenzwertes zu überwachen, beispielsweise Temperaturangaben, Wasserstandsanzeigen, eine Abflugszeit oder eine Ankunftszeit. Voraussetzung ist lediglich, dass diese Parameter im Fernsehtextdatenstrom eines bestimmten Fernsehkanals auf einer bestimmten Fernsehtextseite übertragen werden und in dieser Fernsehtextseite identifiziert werden können.

Eine vorteilhafte Weiterbildung der Erfindung besteht darin, zeitlich aufeinanderfolgende, identifizierte Parameterwerte im nichtflüchtigen Speicher 9 des Fernsehempfängers abzuspeichern. Diese abgespeicherten Werte können vom Mikrocomputer 4 zur Erstellung eines Diagramms verwendet werden, welches dem Benutzer einen Überblick über den zeitlichen Verlauf der identifizierten Parameterwerte gibt. Dieses Diagramm wird entweder auf dem Display 6 des Fernsehempfängers dargestellt oder mittels eines an die Druckerschnittstelle 16 angeschlossenen Druckers ausgedruckt. Wird in dieses Diagramm weiterhin eine Linie eingezeichnet, die den Parametergrenzwert kennzeichnet, dann kann der Benutzer gut erkennen, ob sich der Ist-Parameterwert dem Parametergrenzwert nähert oder sich von diesem entfernt. Im letzteren Fall kann der Benutzer den Parametergrenzwert an den Verlauf des Ist-Parameterwertes anpassen, beispielsweise im Sinne einer Erhöhung oder Erniedrigung eines Aktien-Verkaufskurses.

### Bezugszeichenliste

- 1: Eingangsanschluss
- 2: Empfangsstufe
- 3: Teletextabtrennstufe
- 4: Mikrocomputer
- 5: Zeichengenerator
- 6: Display
- 7: Fernbedienungsgeber
- 8: Fernbedienempfänger
- 9: Speicher
- 10: Tonsignalgenerator

- 11: Lautsprecher
- 12: Ausgangsanschluss
- 13: ISDN-Leitung
- 14: Ausgangsanschluss
- 15: Handy
- 16: Druckerschnittstelle

- TV: Fernsehempfänger

## Patentansprüche

1. Verfahren zur Überwachung eines in einem Fernsehtextdatenstrom übertragenen und einer Fernsehtextseite zugeordneten Parameterwertes, mit folgenden Verfahrensschritten:
- Abtrennen der der Fernsehtextseite entsprechenden Daten aus dem übertragenen Fernsehtextdatenstrom,
- Identifizieren eines in den abgetrennten Daten enthaltenen Parameterwertes,
- Vergleichen des identifizierten Parameterwertes mit einem abgespeicherten Parametergrenzwert,
- Ausgabe eines Meldesignals, wenn der identifizierte Parameterwert mit dem abgespeicherten Parametergrenzwert übereinstimmt oder diesen überschreitet, wobei die Ausgabe des Meldesignals
durch die Absendung
- einer e-mail-Nachricht erfolgt und/oder
- einer SMS-Nachricht und/oder
- einer Telefonnachricht und
durch die Generierung einer Bildschirmeinblendung erfolgt und/oder ein akustisches Meldesignal ausgegeben wird,
- Abspeichern von zeitlich aufeinanderfolgenden identifizierten Parameterwerten und
- Anzeigen und/oder Ausdrucken von einem dem zeitlichen Verlauf der identifizierten Parameterwerte entsprechendes Diagramm.

2. Verfahren nach Anspruch 1,
**dadurch gekennzeichnet, dass**
die Überwachung im eingeschalteten Zustand und/oder im Bereitschaftsbetrieb eines Fernsehempfängers erfolgt.

3. Verfahren nach einem der vorhergehenden Ansprüche,
**dadurch gekennzeichnet, dass**
die Überwachung für die Dauer eines vorgegebenen Zeitintervalles erfolgt.

4. Verfahren nach einem der vorhergehenden Ansprüche,
**dadurch gekennzeichnet, dass**
der zu überwachende Parameterwert einem Börsenkurs, einer Temperaturangabe, einer Wasserstandsangabe, einer Abflugzeit oder einer Ankunftszeit entspricht.

5. Vorrichtung zur Überwachung eines in einem Fernsehtextdatenstrom übertragenen und einer Fernsehtextseite zugeordneten Parameterwertes, mit
- einer Fernsehtextabtrennstufe (3),
- einem mit der Fernsehtextabtrennstufe (3) verbundenen Mikrocomputer (4) und
- einem Speicher (9),
**dadurch gekennzeichnet, dass**
der Mikrocomputer (4) dazu vorgesehen ist, die einer spezifizierten Fernsehtextseite entsprechenden Daten aus dem Fernsehtextdatenstrom abzutrennen, einen in den abgetrennten Daten enthalten Parameterwert zu identifizieren, den identifizierten Parameterwert mit einem aus dem Speicher (9) gelesenen Parametergrenzwert zu vergleichen und ein Meldesignal auszugeben, wenn der identifizierte Parameterwert mit dem aus dem Speicher gelesenen Parametergrenzwert übereinstimmt oder diesen überschreitet, wobei der Mikrocomputer (4) das Meldesignal in Form
- einer e-mail-Nachricht und/oder
- einer SMS-Nachricht und/oder
- einer Telefonnachricht, und in Form einer Bildschirmeinblendung und/oder eines akustischen Meldesignal generiert, wobei der Speicher (9) einen Speicherbereich aufweist, der zur Abspeicherung zeitlich aufeinanderfolgender identifizierter Parameterwerte vorgesehen ist, und wobei der Mikrocomputer (4) zur Generierung eines den zeitlichen Verlauf der identifizierten Parameterwerte entsprechenden Diagrammes vorgesehen ist und das Diagramm auf einem Display (6) darstellbar ist und/oder über eine Druckerschnittstelle (16) ausgebbar ist.

6. Vorrichtung nach Anspruch 5,
**dadurch gekennzeichnet, dass**
der Mikrocomputer (4) zur Ausgabe des Meldesignals einen Tonsignalgenerator (10) ansteuert, dessen Ausgangssignal einem Lautsprecher (11) zugeführt wird.

7. Vorrichtung nach einem der Ansprüche 5 oder 6,
**dadurch gekennzeichnet, dass**
sie Bestandteil eines Fernsehempfängers (TV) ist und die Überwachung im eingeschalteten Zustand und/oder im Bereitschaftsbetrieb des Fernsehempfängers (TV) erfolgt.

8. Vorrichtung nach einem der Ansprüche 5 bis 7,
**dadurch gekennzeichnet, dass**
sie eine Eingabeeinheit (7, 8) aufweist, die zur Anwahl eines gewünschten Fernsehprogrammes, zur Spezifizierung einer gewünschten Fernsehtextseite, zur Markierung eines gewünschten Parameterwertes und zur Eingabe des Parametergrenzwertes vorgesehen ist.

9. Vorrichtung nach Anspruch 8,
**dadurch gekennzeichnet, dass**
die Eingabeeinheit (7, 8) zur Eingabe eines zu überwachenden Zeitintervalles vorgesehen ist.

## Claims

1. Method for monitoring a parameter value transmitted in a teletext data stream and allocated to a teletext page, having the following method steps:
- separating the data corresponding to the teletext page from the transmitted teletext data stream,
- identifying a parameter value contained in the separated data,
- comparing the identified parameter value with a stored parameter threshold value,
- emitting a notification signal when the identified parameter value matches the stored parameter threshold value or exceeds it, wherein emitting the notification signal takes place by sending
- an email message and/or
- an SMS message and/or
- a telephone message and
takes place by generating an on-screen display and/or an acoustic notification signal is emitted,
- storing identified parameter values that are temporally successive and
- displaying and/or printing a diagram corresponding to the temporal course of the identified parameter values.

2. Method according to claim 1,
**characterised in that**
the monitoring takes place in the switched-on state and/or in the standby mode of a television receiver.

3. Method according to one of the preceding claims,
**characterised in that**
the monitoring takes place for the duration of a predetermined time interval.

4. Method according to one of the preceding claims,
**characterised in that**
the parameter value to be monitored corresponds to a market price, a temperature value, a water level value, a departure time or an arrival time.

5. Device for monitoring a parameter value transmitted in a teletext data stream and allocated to a teletext page, having
- a teletext separation unit (3),
- a microcomputer (4) connected to the teletext separation unit (3) and
- a memory (9),
**characterised in that**
the microcomputer (4) is provided to separate the data corresponding to a specified teletext page from the teletext data stream, to identify a parameter value contained in the separated data, to compare the identified parameter value with a parameter threshold value read from the memory (9) and to emit a notification signal when the identified parameter values matches the parameter threshold value read from the memory or exceeds it, wherein the microcomputer (4) generates the notification signal in the form of
- an email message and/or
- an SMS message and/or
- a telephone message
and in the form of an on-screen display and/or an acoustic notification signal, wherein the memory (9) has a memory region that is provided for storing identified parameter values that are temporally successive, and wherein the microcomputer (4) is provided for generating a diagram corresponding to the temporal course of the identified parameter value, and the diagram can be depicted on a display (6) and/or can be emitted via a printer interface (16).

6. Device according to claim 5,
**characterised in that**
the microcomputer (4) controls a sound signal generator (10) for emitting the notification signal, the output signal of said sound signal generator (10) supplying a loud speaker (11).

7. Device according to one of claims 5 or 6,
**characterised in that**
it is a component of a television receiver (TV), and the monitoring takes place in the switched-on state and/or in the standby mode of the television receiver (TV).

8. Device according to one of claims 5 to 7,
**characterised in that**
it has an input unit (7, 8) that is provided for choosing a desired television programme, for specifying a desired teletext page, for marking a desired parameter value and for inputting the parameter threshold value.

9. Device according to claim 8,
**characterised in that**
the input unit (7, 8) is provided for inputting a time interval to be monitored.

## Revendications

1. Procédé de surveillance d'une valeur de paramètre transmise dans un flux de données de télétexte et correspondant à une page de télétexte, avec les étapes suivantes :
- séparation des données correspondant à la page de télétexte du flux de données de télétexte transmis,
- identification d'une valeur de paramètre contenue dans les données séparées,
- comparaison de la valeur de paramètre identifiée avec une valeur limite de paramètre enregistrée,
- émission d'un signal d'alerte lorsque la valeur de paramètre identifiée coïncide avec la valeur limite du paramètre enregistrée ou dépasse celle-ci, l'émission du signal d'alerte étant effectuée par l'envoi
- d'un message e-mail et/ou
- d'un message SMS et/ou
- d'un message téléphonique et
par la génération d'une incrustation d'écran et/ou d'un signal d'alerte acoustique,
- enregistrement de valeurs de paramètre identifiées qui se succèdent dans le temps et
- affichage et/ou impression d'un diagramme correspondant à l'évolution en fonction du temps des valeurs de paramètre identifiées.

2. Procédé selon la revendication 1,
**caractérisé en ce que**
la surveillance a lieu dans l'état activé et/ou en mode veille d'un récepteur de télévision.

3. Procédé selon l'une des revendications précédentes,
**caractérisé en ce que**
la surveillance a lieu pendant la durée d'un intervalle de temps prédéterminé.

4. Procédé selon l'une des revendications précédentes,
**caractérisé en ce que**
la valeur du paramètre à surveiller correspond à un cours de bourse, une indication de température, une indication de niveau d'eau, une heure de vol ou une heure d'arrivée.

5. Dispositif de surveillance d'une valeur de paramètre transmise dans un flux de données de télétexte et correspondant à une page de télétexte, avec
- un étage de séparation de télétexte (3),
- un micro-ordinateur (4) relié avec l'étage de séparation de télétexte (3) et
- une mémoire (9),
**caractérisé en ce que**
le micro-ordinateur (4) est conçu pour séparer les données correspondant à une page spécifiée de télétexte du flux de données de télétexte, identifier une valeur de paramètre contenue dans les données séparées, comparer la valeur de paramètre identifiée avec une valeur limite de paramètre lue dans la mémoire (9) et émettre un signal d'alerte lorsque la valeur de paramètre identifiée coïncide avec la valeur limite de paramètre lue dans la mémoire ou la dépasse, le micro-ordinateur (4) générant le signal d'alerte sous la forme
- d'un message e-mail et/ou
- d'un message SMS et/ou
- d'un message téléphonique
et sous la forme d'une incrustation d'écran et/ou d'un signal d'alerte acoustique,
la mémoire (9) comprenant une zone de mémoire qui est prévue pour l'enregistrement de valeurs de paramètre identifiées qui se succèdent dans le temps et le micro-ordinateur (4) étant conçu pour générer un diagramme correspondant à l'évolution dans le temps des valeurs de paramètre identifiées et le diagramme pouvant être représenté sur un affichage (6) et/ou sorti par l'intermédiaire d'une interface d'imprimante (16).

6. Dispositif selon la revendication 5,
**caractérisé en ce que**
le micro-ordinateur (4) contrôle, pour l'émission du signal d'alerte, un générateur de signaux acoustiques (10), dont le signal de sortie est entré dan un haut-parleur (11).

7. Dispositif selon l'une des revendications 5 ou 6,
**caractérisé en ce que**
il fait partie d'un récepteur de télévision (TV) et la surveillance a lieu dans l'état activé et/ou en mode veille du récepteur de télévision (TV).

8. Dispositif selon l'une des revendications 5 à 7,
**caractérisé en ce que**
il comprend une unité d'entrée (7, 8) qui est conçue pour la sélection d'un programme de télévision souhaité, pour la spécification d'une page de télétexte souhaitée, pour le marquage d'une valeur de paramètre souhaitée et pour l'entrée de la valeur limite du paramètre.

9. Dispositif selon la revendication 8,
**caractérisé en ce que**
l'unité d'entrée (7, 8) est conçue pour l'entrée d'un intervalle de temps à surveiller.
